# EUROPEAN PATENT APPLICATION

(11) **EP 4 818 003 A1**
(43) Date of publication of application: **07.10.2026**
(21) Application number: 24895857.1
(22) Date of filing: 04.09.2024
(51) Int. Cl.: B62D 25/08, B62D 21/11, B62D 25/02

(54) **VEHICLE BODY FRAME ASSEMBLY AND VEHICLE**

(30) Priority: 30.11.2023 CN 202311631176
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: LIU, Guozhao, Hangzhou, Zhejiang 310051 (CN); BU, Kunquan, Hangzhou, Zhejiang 310051 (CN); SHAN, Xile, Hangzhou, Zhejiang 310051 (CN); YANG, Yalin, Hangzhou, Zhejiang 310051 (CN); MENG, Lei, Hangzhou, Zhejiang 310051 (CN); LI, Xin, Hangzhou, Zhejiang 310051 (CN)
(74) Representative: Murgitroyd & Company
(86) International application number: PCT/CN2024/116878
(87) International publication number: WO 2025/112758

(57) **Abstract**

The present application relates to the technical field of vehicle parts. Provided are a vehicle body frame assembly and a vehicle. The vehicle body frame assembly comprises front shock absorber towers and a front wall frame, wherein the front wall frame comprises a front wall upper cross beam and a front windshield lower cross beam, the front shock absorber towers and the front wall upper cross beam are respectively connected to a side, facing the interior of the vehicle, of the front windshield lower cross beam, and two ends, in the left-right direction of the vehicle, of the front wall upper cross beam are respectively connected to the front shock absorber towers. The rigidity strength of the front shock absorber towers and the front wall frame can be improved, and the front shock absorber towers can be arranged in the vehicle, thereby facilitating an increase in the in-vehicle space.

## Description

### Technical Field

The present application relates to the technical field of vehicle parts, in particular to a vehicle body frame assembly and a vehicle.

### Background Art

With the increasing demand for in-vehicle space and light weight of the whole vehicle of a new energy vehicle, the design of a vehicle body frame structure is gradually developing towards diversification and light weight. However, excessive light weight will reduce the strength of the vehicle body frame structure, thereby resulting in a reduction in the performance of the whole vehicle. For example, if the rigidity of the front shock absorber towers in the vehicle body frame structure is insufficient, the front shock absorber towers are likely to be deformed in the event of a collision, such that there is a certain potential safety hazard in a front shock absorber.

At present, in order to improve the structural rigidity and strength of the front shock absorber towers, two methods are generally adopted. One of the methods is to increase a material thickness or a support to satisfy a rigidity performance, but it is easy to increase the weight of the whole vehicle, production costs and space occupation, thereby resulting in a reduction in an in-vehicle space; the other method is to adopt a cast aluminum structure, however, this method requires to recreate a mold, thereby resulting in higher material and development costs.

### Summary of the Invention

How to reduce the production cost and increase the in-vehicle space on the premise of ensuring the rigidity and strength of the front shock absorber towers has become a problem to be solved in the present application.

In order to solve the above-mentioned problem, the present application provides a vehicle body frame assembly, including front shock absorber towers and a front wall frame, wherein the front wall frame includes a front wall upper cross beam and a front windshield lower cross beam, the front shock absorber towers and the front wall upper cross beam are respectively connected to a side, facing the interior of a vehicle, of the front windshield lower cross beam, and two ends, in the left-right direction of the vehicle, of the front wall upper cross beam are respectively connected to the front shock absorber towers.

Optionally, each of the front shock absorber towers includes a first plate body, a second plate body, and a third plate body, the first plate body is connected to the second plate body and is located above the second plate body; and the first plate body is respectively overlapped on the front wall upper cross beam and the front windshield lower cross beam, and the second plate body is connected to an upper end of the third plate body and is matched with the third plate body to enclose a first cavity configured to mount a front shock absorber spring.

Optionally, each of the front shock absorber towers further includes a fourth plate body arranged in the first cavity and matched with the third plate body to enclose a second cavity.

Optionally, the vehicle body frame assembly further includes a front subframe, the front subframe includes frame longitudinal beams and a first frame cross beam, two ends, in the left-right direction of the vehicle, of the first frame cross beam are respectively connected to the frame longitudinal beams, and the front shock absorber towers are connected to the corresponding frame longitudinal beams.

Optionally, the front subframe further includes a second frame cross beam, the first frame cross beam and the second frame cross beam are spaced in the front-rear direction of the vehicle, and two ends, in the left-right direction of the vehicle, of the second frame cross beam are respectively connected to the frame longitudinal beams.

Optionally, the vehicle body frame assembly further includes a floor skeleton, the floor skeleton includes floor diagonal beams, floor cross beams, and a central tunnel longitudinal beam, an end, in the front-rear direction of the vehicle, of the central tunnel longitudinal beam is connected to a middle position of the first frame cross beam, two ends, in the left-right direction of the vehicle, of the central tunnel longitudinal beam are respectively connected to the floor cross beams, and two ends of the floor diagonal beams are respectively connected to the first frame cross beam and the central tunnel longitudinal beam.

Optionally, the floor skeleton further includes sill side beams arranged to correspond to the frame longitudinal beams and connected to the corresponding frame longitudinal beams, and ends, away from the central tunnel longitudinal beam, of the floor cross beams are connected to the corresponding sill side beams.

Optionally, each of the sill side beams includes a first side beam and a second side beam, the first side beam is provided with a third cavity, and the second side beam is connected to a side, facing the central tunnel longitudinal beam, of the first side beam and is matched with the first side beam to enclose a fourth cavity.

Optionally, the floor skeleton further includes first reinforcing plates and/or second reinforcing plates, the first reinforcing plates are connected to the central tunnel longitudinal beam and extend along the central tunnel longitudinal beam, and the second reinforcing plates are connected to the floor cross beams and extend along the floor cross beams.

In order to solve the above-mentioned problem, the present application further provides a vehicle, including the vehicle body frame assembly mentioned above.

Compared with traditional technologies, the present application has the following beneficial effects:

for the vehicle body frame assembly in the present application, the left and right ends of the front wall upper cross beam can be respectively connected to the front shock absorber towers on left and right sides of the vehicle, such that the front wall upper cross beam can support the front shock absorber towers on the left and right sides; and the front shock absorber towers on the left and right sides can also support the front wall upper cross beam, such that the rigidity and strength of the front shock absorber towers and the front wall frame can be improved. At the same time, the front shock absorber towers and the front wall upper cross beam are respectively connected to the side, facing the interior of the vehicle, of the front windshield lower cross beam, such that the front shock absorber towers and the front wall upper cross beam are further supported by the front windshield lower cross beam, then, the rigidity and strength of the front shock absorber towers and the front wall upper cross beam are further improved, and it is ensured that the vehicle body frame assembly satisfies a rigidity performance. Compared with the traditional technologies, the present application not only can reduce the production cost, but also can reduce the weight of the whole vehicle. Moreover, the front shock absorber towers are connected to the side, facing the interior of the vehicle, of the front windshield lower cross beam, such that the front shock absorber towers can be laid in the vehicle, in this way, it is convenient to forwards move a dashboard panel configured to partition an engine compartment and a passenger compartment to front sides of the front shock absorber towers to increase the in-vehicle space.

### Brief Description of the Drawings

Fig. 1 is a schematic structural diagram of a vehicle body frame assembly in an embodiment of the present application;
Fig. 2 is a schematic structural diagram of a front wall frame and a front subframe of a vehicle body during assembly in an embodiment of the present application;
Fig. 3 is a schematic structural diagram of a front wall frame and a front subframe of a vehicle body at another viewing angle during assembly in an embodiment of the present application;
Fig. 4 is a schematic top-view structural diagram of a vehicle body frame assembly in an embodiment of the present application;
Fig. 5 is a schematic cross-sectional structural diagram of part A-A in Fig. 4; and
Fig. 6 is a schematic structural diagram of a vehicle body frame assembly at another viewing angle in an embodiment of the present application.

### Description for reference numerals:

1, front shock absorber tower; 11, first plate body; 12, second plate body; 13, third plate body; 14, fourth plate body; 2, front wall frame; 21, front wall upper cross beam; 22, front windshield glass lower cross beam; 3, front subframe; 31, frame longitudinal beam; 32, first frame cross beam; 33, second frame cross beam; 4, floor skeleton; 41, floor diagonal beam; 42, floor cross beam; 43, central tunnel longitudinal beam; 44, sill side beam; 441, first side beam; 442, second side beam; 443, third cavity; 444, fourth cavity; 45, first reinforcing plate; and 46, second reinforcing plate.

### Detailed Description of the Invention

In order to make the above-mentioned objects, features and advantages of the present application clearer and more understandable, specific embodiments of the present application will be described in detail below in conjunction with the drawings.

The Z axis in the drawings represents the vertical direction, namely, an upper-lower position, and the forward direction of the Z axis represents an upside, and the reverse direction of the Z axis represents a downside; the X axis in the drawings represents the horizontal direction or the longitudinal direction and is designated as a front-rear position, the forward direction of the X axis represents a front side, and the reverse direction of the X axis represents a rear side; and the Y axis in the drawings is designated as a left-right position or the transverse direction, the forward direction of the Y axis represents a left side, and the reverse direction of the Y axis represents a right side. At the same time, it should also be noted that the representations of the foregoing Z axis, Y axis and X axis are only intended to facilitate describing the present application and simplify the description, rather than to indicate or imply that the appointed device or element must be located in a particular orientation or constructed and operated in a particular orientation so as not be be understood as limitations on the present application.

It should be noted that terms "first", "second" and the like in the description and claims of the present application and in the above-described drawings are used for distinguishing similar objects and are not necessarily used for describing a particular sequential or chronological order. It should be understood that data used in such a way are interchangeable under appropriate circumstances, such that the embodiments of the present application described herein can be implemented in other sequences than those illustrated or described herein.

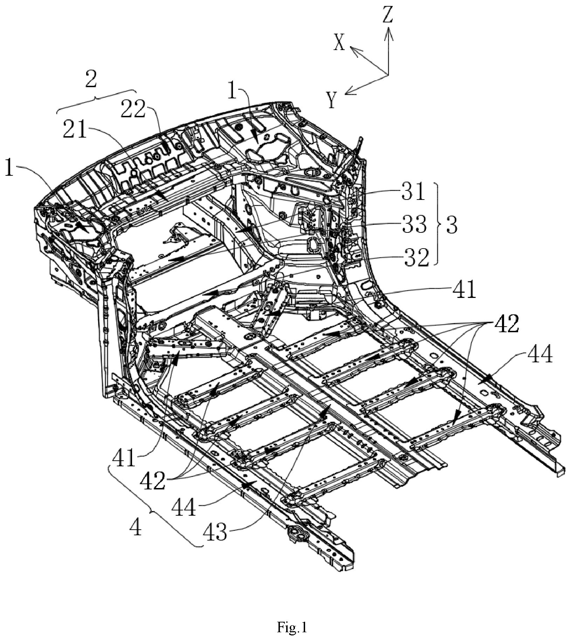

As shown in Fig. 1, an embodiment of the present application provides a vehicle body frame assembly, including front shock absorber towers 1 and a front wall frame 2, wherein the front wall frame 2 includes a front wall upper cross beam 21 and a front windshield lower cross beam 22, the front shock absorber towers 1 and the front wall upper cross beam 21 are respectively connected to a side, facing the interior of a vehicle, of the front windshield lower cross beam 22, and two ends, in the left-right direction of the vehicle, of the front wall upper cross beam 21 are respectively connected to the front shock absorber towers 1.

It should be noted that the left-right direction of the vehicle is the Y-axis direction in Fig. 1, which is abbreviated as the left-right direction or the transverse direction, and accordingly, the front-rear direction of the vehicle is the X-axis direction in Fig. 1, which is abbreviated as the front-rear direction or the longitudinal direction.

It should be further noted that an engine compartment of the vehicle is located on a front side of the front windshield lower cross beam 22, and a passenger compartment of the vehicle (namely, the interior space of the vehicle) is located on a rear side of the front windshield lower cross beam 22, such that the side, facing the interior of the vehicle, of the front windshield lower cross beam 22 is the rear side of the front windshield lower cross beam 22, and accordingly, the side, facing the exterior of the vehicle, of the front windshield lower cross beam 22 is the front side of the front windshield lower cross beam 22.

Specifically, the front shock absorber towers 1 are parts for mounting a front shock absorber spring and are generally of semi-enclosed structures, and lower ends of the semi-enclosed structures are open; one front shock absorber is generally provided at each of front wheels on left and right sides of the vehicle; and therefore, one front shock absorber tower 1 is also provided at each of the front wheels on the left and right sides of the vehicle. The front wall upper cross beam 21 and the front windshield lower cross beam 22 are arranged generally in a transverse direction (namely, in the Y-axis direction in Fig. 1) below a front windshield and are located on a rear side of the engine compartment. The front wall upper cross beam 21 is generally connected to a middle position of a rear end of the front windscreen lower cross beam 22 by welding, the front shock absorber tower 1 on the left side is generally connected to a left end of the front wall upper cross beam 21 and a left side of the rear end of the front windscreen lower cross beam 22 (namely, a left rear end of the front windscreen lower cross beam 22) by welding, and the front shock absorber tower 1 on the right side is generally connected to a right end of the front wall upper cross beam 21 and a right side of the rear end of the front windscreen lower cross beam 22 (namely, a right rear end of the front windscreen lower cross beam 22) by welding.

In the present embodiment, the left and right ends of the front wall upper cross beam 21 can be respectively connected to the front shock absorber towers 1 on the left and right sides of the vehicle, such that the front wall upper cross beam 21 can support the front shock absorber towers 1 on the left and right sides; and the front shock absorber towers 1 on the left and right sides can also support the front wall upper cross beam 21, such that the rigidity and strength of the front shock absorber towers 1 and the front wall frame 2 can be improved. At the same time, the front shock absorber towers 1 and the front wall upper cross beam 21 are respectively connected to the side, facing the interior of the vehicle, of the front windshield lower cross beam 22, such that the front shock absorber towers 1 and the front wall upper cross beam 21 are further supported by the front windshield lower cross beam 22, then, the rigidity and strength of the front shock absorber towers 1 and the front wall upper cross beam 21 are further improved, and it is ensured that the vehicle body frame assembly satisfies a rigidity performance. Compared with traditional technologies, the present application not only can reduce the production cost, but also can reduce the weight of the whole vehicle. Moreover, the front shock absorber towers 1 are connected to the side, facing the interior of the vehicle, of the front windshield lower cross beam 22, such that the front shock absorber towers 1 can be laid in the vehicle, in this way, it is convenient to forwards move a dashboard panel configured to partition an engine compartment and a passenger compartment to front sides of the front shock absorber towers 1 to increase the in-vehicle space.

Further, the front wall upper cross beam 21 and/or the front windshield lower cross beam 22 is of a cavity beam structure. In this way, the bending resistance of the front wall upper cross beam 21 and/or the front windshield lower cross beam 22 can be improved, then, the degree of deformation of the front wall upper cross beam 21 and/or the front windshield lower cross beam 22 in the event of a collision is reduced, and the in-vehicle safety is ensured.

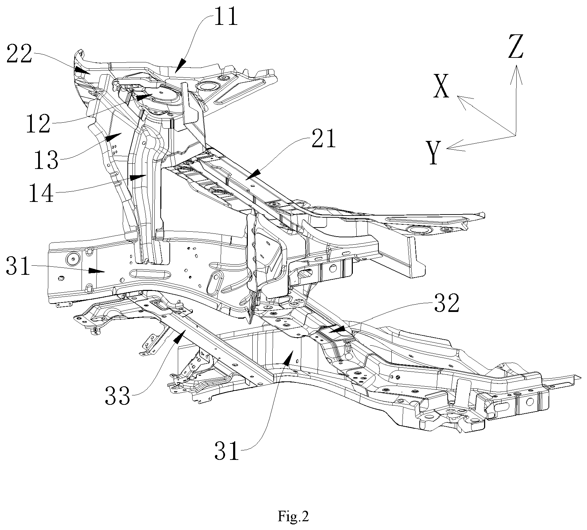

Optionally, as shown in Fig. 2, each of the front shock absorber towers 1 includes a first plate body 11, a second plate body 12, and a third plate body 13, the first plate body 11 is connected to the second plate body 12 and is located above the second plate body 12; and the first plate body 11 is respectively overlapped on the front wall upper cross beam 21 and the front windshield lower cross beam 22, and the second plate body 12 is connected to an upper end of the third plate body 13 and matched with the third plate body 13 to enclose a first cavity configured to mount a front shock absorber spring.

Specifically, the first plate body 11 is a connecting portion of the front shock absorber tower 1 and is configured to connect the front shock absorber tower 1 to the front wall upper cross beam 21 and the front windshield lower cross beam 22; the second plate body 12 and the third plate body 13 are main structures of the front shock absorber tower 1 and are configured to mount the front shock absorber spring; wherein the first plate body 11 and the second plate body 12 are arranged approximately horizontally, and a front end of the first plate body 11 is overlapped on the front windshield lower cross beam 22; a left/right end of the first plate body 11 is overlapped on the front wall upper cross beam 21; the third plate body 13 is arranged approximately vertically, and the third plate body 13 is arranged around an edge of the second plate body 12 and is matched with the second plate body 12 to enclose the first cavity; and the front shock absorber spring is mounted in the first cavity. In one example, the third plate body 13 may be of a closed ring structure, that is, the third plate body 13 is arranged around the edge of the second plate body 12 for a full circle; in another example, as shown in Fig. 2, the third plate body 13 may be of an open ring structure, that is, the third plate body 13 is arranged around a part of the edge of the second plate body 12; and it is not specifically arranged herein, and may be selected as required in practical applications.

In the present embodiment, by designing the front shock absorber tower 1 to be composed of the three plate bodies, namely, the first plate body 11, the second plate body 12, and the third plate body 13, not only can the mechanical structure of the front shock absorber tower 1 be simplified, but also segmented production and machining for the front shock absorber tower 1 are facilitated, the design difficulty of a production mold is lowered, and the production efficiency is increased. Moreover, by respectively overlapping the first plate body 11 on the front wall upper cross beam 21 and the front windshield lower cross beam 22, areas of connection between the front shock absorber tower 1 and the front wall upper cross beam 21 and between the front shock absorber tower 1 and the front windshield lower cross beam 22 are increased, and the stability of connection among the three is ensured.

Optionally, as shown in Fig. 2, each of the front shock absorber towers 1 further includes a fourth plate body 14 arranged in the first cavity and matched with the third plate body 13 to enclose a second cavity.

In the present embodiment, the fourth plate body 14 is generally welded on an inner side surface of the third plate body 13 (namely, a side surface, facing the first cavity, of the third plate body 13), and the fourth plate body 14 may be arranged vertically, horizontally, or obliquely. In practical applications, it is generally preferred that the fourth plate body 14 is arranged vertically so as to improve the rigidity and strength of the front shock absorber tower 1 in the vertical direction. The second cavity enclosed by the fourth plate body 14 and the third plate body 13 is generally a closed cavity, and may also be an open cavity. In this way, the fourth plate body 14 is arranged in the first cavity of the front shock absorber tower 1, and the fourth plate body 14 is matched with the third plate body 13 to enclose the second cavity, such that the structural strength and rigidity of the front shock absorber tower 1is further improved by the fourth plate body 14. In addition, when the fourth plate body 14 and the third plate body 13 extend downwards to be connected to frame longitudinal beams 31 to be described hereinafter, due to the arrangement of the fourth plate body 14, the connection strength between each of the front shock absorber towers 1 and each of the frame longitudinal beams 31 can also be improved, and due to the arrangement of the second cavity, the bending resistance at a position where the both are connected can be improved.

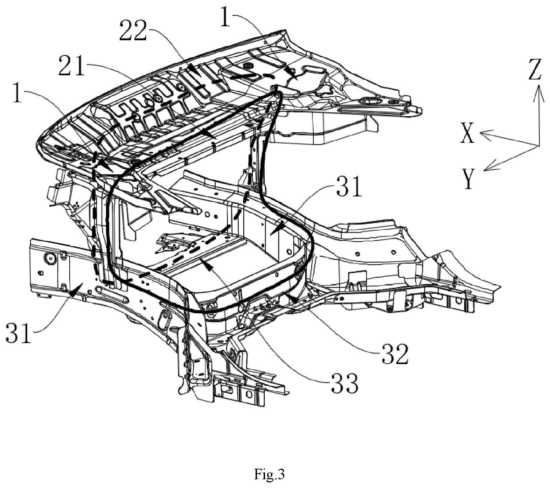

Optionally, as shown in Fig. 3, the vehicle body frame assembly further includes a front subframe 3, the front subframe 3 includes frame longitudinal beams 31 and a first frame cross beam 32, two ends, in the left-right direction of the vehicle, of the first frame cross beam 32 are respectively connected to the frame longitudinal beams 31, and the front shock absorber towers 1 are connected to the corresponding frame longitudinal beams 31.

In the present embodiment, the front subframe 3 is located below the front shock absorber towers 1 and the front wall frame 2, wherein the frame longitudinal beams 31 of the front subframe 3 are arranged in the longitudinal direction, the first frame cross beam 32 is arranged in the transverse direction and is approximately located below the front shock absorber towers 1 and the front wall frame 2, moreover, one frame longitudinal beam 31 is provided on each of the left and right sides of the vehicle, that is, two frame longitudinal beams 31 are provided, left and right ends of the first frame cross beam 32 are respectively fixedly connected to the two frame longitudinal beams 31 in a way such as welding, lower ends of the third plate body 13 and the fourth plate body 14 of the front shock absorber tower 1 on the left side are respectively connected to the frame longitudinal beam 31 on the left side, and lower ends of the third plate body 13 and the fourth plate body 14 of the front shock absorber tower 1 on the right side are connected to the frame longitudinal beam 31 on the right side. In this way, left ends of the front wall upper cross beam 21 and the front windshield lower cross beam 22 are connected to the left end of the first frame cross beam 32 via the front shock absorber tower 1 on the left side and the frame longitudinal beam 31 on the left side, and right ends of the front wall upper cross beam 21 and the front windshield lower cross beam 22 are connected to the right end of the first frame cross beam 32 via the front shock absorber tower 1 on the right side and the frame longitudinal beam 31 on the right side to form a closed ring structure, namely, a first ring structure represented by a bold solid line box in Fig. 3, such that the structural strength and rigidity of a front end portion of the vehicle body frame assembly are improved, and it is ensured that the vehicle body frame assembly satisfies a rigidity performance.

Optionally, as shown in Fig. 3, the front subframe 3 further includes a second frame cross beam 33, the first frame cross beam 32 and the second frame cross beam 33 are spaced in the front-rear direction of the vehicle, and two ends, in the left-right direction of the vehicle, of the second frame cross beam 33 are respectively connected to the frame longitudinal beams 31.

In the present embodiment, the second frame cross beam 33 is also arranged in the transverse direction and is generally arranged at a rear side of the first frame cross beam 32, and left and right ends of the second frame cross beam 33 are respectively fixedly connected to the frame longitudinal beams 31 on the left and right sides in a way such as bolt connection. In this way, the left ends of the front wall upper cross beam 21 and the front windshield lower cross beam 22 are connected to a left end of the second frame cross beam 33 via the front shock absorber tower 1 on the left side and the frame longitudinal beam 31 on the left side, and the right ends of the front wall upper cross beam 21 and the front windshield lower cross beam 22 are connected to a right end of the second frame cross beam 33 via the front shock absorber tower 1 on the right side and the frame longitudinal beam 31 on the right side to also form a closed ring structure, namely, a second ring structure represented by a bold dotted line box in Fig. 3, such that the front shock absorber towers 1, the front wall frame 2 and the front subframe 3 form a double-ring structure. The structural strength and rigidity of the front end portion of the vehicle body frame assembly can be further improved, and then, it is further ensured that the vehicle body frame assembly satisfies the rigidity performance.

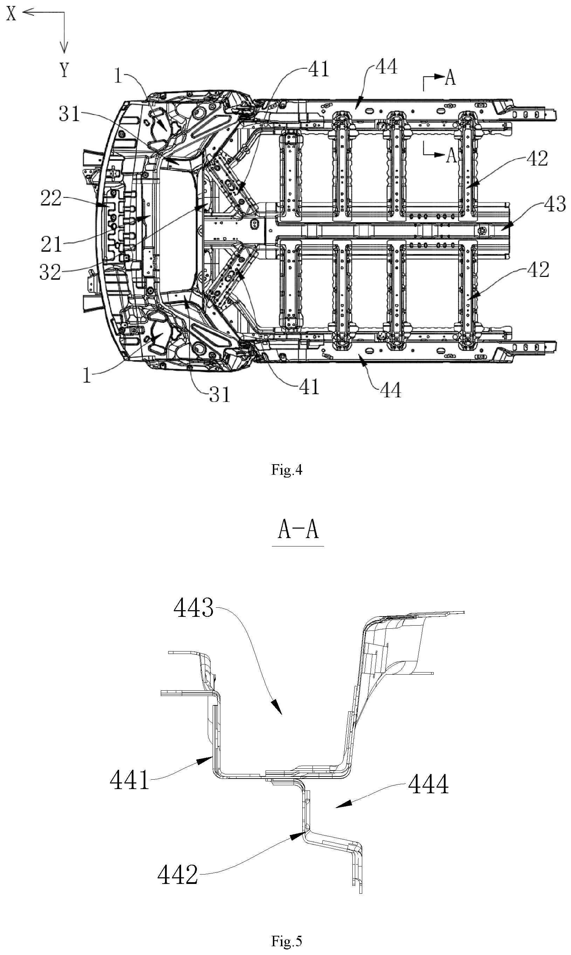

Optionally, as shown in Fig. 1 and Fig. 4, the vehicle body frame assembly further includes a floor skeleton 4, the floor skeleton 4 includes floor diagonal beams 41, floor cross beams 42, and a central tunnel longitudinal beam 43, an end, in the front-rear direction of the vehicle, of the central tunnel longitudinal beam 43 is connected to a middle position of the first frame cross beam 32, two ends, in the left-right direction of the vehicle, of the central tunnel longitudinal beam 43 are respectively connected to the floor cross beams 42, and two ends of the floor diagonal beams 41 are respectively connected to the first frame cross beam 32 and the central tunnel longitudinal beam 43.

In the present embodiment, one floor diagonal beam 41 is generally provided on each of left and right sides of the central tunnel longitudinal beam 43, and a plurality of floor cross beams 42 are also generally provided on each of the left and right sides of the central tunnel longitudinal beam 43. For example, Fig. 4 shows an example in which four floor cross beams 42 are provided on each of the left and right sides of the central tunnel longitudinal beam 43. The floor skeleton 4 is generally of a left-right symmetrical structure, that is, two floor diagonal beams 41 are symmetrically arranged on the left and right sides of the central tunnel longitudinal beam 43, and a plurality of floor cross beams 42 are also symmetrically arranged on the left and right sides of the central tunnel longitudinal beam 43. Moreover, two ends of the floor diagonal beams 41 are respectively connected to the first frame cross beam 32 and the central tunnel longitudinal beam 43, that is, the floor diagonal beams 41 are arranged obliquely between the first frame cross beam 32 and the floor cross beam 42 closest to the first frame cross beam 32. For example, when three floor cross beams 42 are provided on each of the left and right sides of the central tunnel longitudinal beam 43, the floor skeleton 4 is approximately of a structure shaped like a Chinese character "sheep". In this way, by arranging the floor diagonal beams 41 and respectively connecting the two ends of the floor diagonal beams 41 to the first frame cross beam 32 and the central tunnel longitudinal beam 43, the floor diagonal beams 41 are matched with the first frame cross beam 32 and the central tunnel longitudinal beams 43 to enclose a triangular ring structure, that is, a front end of the floor skeleton 4 is matched with the front subframe 3 to enclose a closed ring structure, such that the rigidity and strength of the lower half of the vehicle body frame assembly (namely, a lower vehicle body frame) can be improved.

Further, as shown in Fig. 4, ends, away from the central tunnel longitudinal beams 43, of the floor diagonal beams 41 are connected to connections between the first frame cross beam 32 and the frame longitudinal beams 31. In this way, the rigidity and strength of the connections between the front end of the floor skeleton 4 and the front subframe 3 can be improved, and the stability of the connection of the both can be ensured.

Optionally, as shown in Fig. 1 and Fig. 4, the floor skeleton 4 further includes sill side beams 44 arranged to correspond to the frame longitudinal beams 31 and connected to the corresponding frame longitudinal beams 31, and ends, away from the central tunnel longitudinal beam 43, of the floor cross beams 42 are connected to the corresponding sill side beams 44.

In the present embodiment, like the frame longitudinal beams 31, two sill side beams 44 are also provided, and the two sill side beams 44 are arranged in the longitudinal direction and are respectively connected to rear ends of the left and right frame longitudinal beams 31; specifically, the floor cross beam 42 located on the left side of the central tunnel longitudinal beam 43 is connected to the central tunnel longitudinal beam 43 and is also connected to the sill side beam 44 on the left side; and similarly, the floor cross beam 42 located on the right side of the central tunnel longitudinal beam 43 is connected to the central tunnel longitudinal beam 43 and is also connected to the sill side beam 44 on the right side. In this way, by connecting the floor cross beams 42 on the left and right sides of the central tunnel longitudinal beam 43 to the corresponding sill side beams 44, the floor cross beams 42 are matched with the central tunnel longitudinal beam 43 and the sill side beams 44 to enclose a plurality of closed ring structures such as a "square"-shaped annular structure, that is, the floor skeleton 4 forms a plurality of closed ring structures on the left and right sides of the central tunnel longitudinal beam 43, such that the rigidity and strength of a lower vehicle body frame can be improved, and then, the risk of failure of the vehicle body frame assembly in the event of a frontal or side collision of the vehicle is reduced. In addition, since a center console is generally fixed to the central tunnel longitudinal beam 43, and seats of the whole vehicle are generally fixed to the floor cross beams 42, when the rigidity and strength of the lower vehicle body frame are improved, a mode of the center console and modes of the seats of the whole vehicle can also be improved, and the probability that the mode of the center console and the modes of the seats of the whole vehicle shake can be reduced.

Optionally, as shown in Fig. 4 and Fig. 5, each of the sill side beams 44 includes a first side beam 441 and a second side beam 442, the first side beam 441 is provided with a third cavity 443, and the second side beam 442 is connected to a side, facing the central tunnel longitudinal beam 43, of the first side beam 441 and is matched with the first side beam 441 to enclose a fourth cavity 444.

In the present embodiment, the first side beam 441 may be of a hollow structure, at this time, the interior space of the hollow structure is the third cavity 443; and the first side beam 441 may also be of a semi-enclosed structure having a approximately U-shaped cross section, at this time, the third cavity 443 is enclosed by the first side beam 441 itself. The second side beam 442 is generally welded on a side, facing the central tunnel longitudinal beam 43, of the first side beam 441, namely, an inner side of the first side beam 441, and the second side beam 442 is matched with the first side beam 441 to enclose the fourth cavity 444. In this way, the whole sill side beam 44 is of a double-cavity beam structure provided with the third cavity 443 and the fourth cavity 444, the rigidity and strength of the sill side beam 44 are improved, and rigidity performances of the floor skeleton 4 and even the vehicle body frame assembly are further improved.

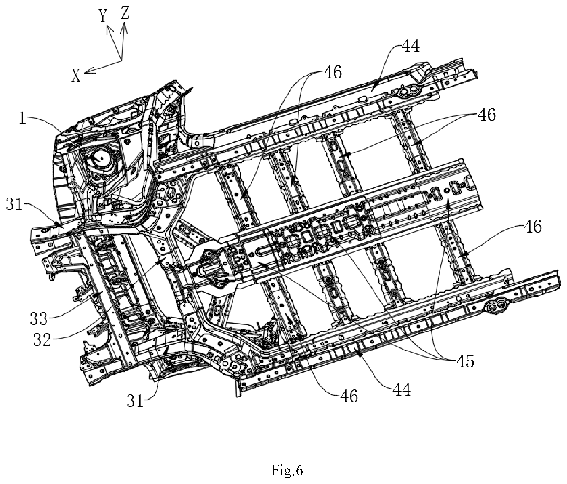

Optionally, as shown in Fig. 1 and Fig. 6, the floor skeleton 4 further includes first reinforcing plates 45 and/or second reinforcing plates 46, the first reinforcing plates 45 are connected to the central tunnel longitudinal beam 43 and extend along the central tunnel longitudinal beam 43, and the second reinforcing plates 46 are connected to the floor cross beams 42 and extend along the floor cross beams 42.

In the present embodiment, when the cross section of the central tunnel longitudinal beam 43 is of a U-shaped structure with a downward opening or a structure having a shape similar to a U shape, the first reinforcing plates 45 are generally arranged on a lower end of the central tunnel longitudinal beam 43, at this time, the first reinforcing plates 45 are matched with the central tunnel longitudinal beam 43 to enclose a cavity beam structure; when the cross section of the central tunnel longitudinal beam 43 is of a U-shaped structure with an upward opening or a structure having a shape similar to a U shape, the first reinforcing plates 45 may also be arranged on an upper end of the central tunnel longitudinal beam 43, at this time, the first reinforcing plates 45 are matched with the central tunnel longitudinal beam 43 to enclose a cavity beam structure. Similarly, according to the specific structures of the floor cross beams 42, the second reinforcing plates 46 may also be arranged on upper or lower ends of the floor cross beams 42 to ensure that the second reinforcing plates 46 are matched with the floor cross beams 42 to enclose a cavity beam structure. In this way, the first reinforcing plates 45 are arranged on the central tunnel longitudinal beam 43 to improve the rigidity and strength of the floor skeleton 4 at the central tunnel longitudinal beam 43, and the second reinforcing plates 46 are arranged on the floor cross beams 42 to improve the rigidity and strength of the floor skeleton 4 at the floor cross beams 42.

Another embodiment of the present application provides a vehicle, including the vehicle body frame assembly mentioned above.

The beneficial effects of the vehicle in the present embodiment with respect to the traditional technologies are the same as those of the above-mentioned vehicle body frame assembly so as to be no longer repeated herein.

Although the present application has been described above, the protective scope of the present application is not limited thereto. Various alterations and modifications can be made by those skilled in the art without departing from the spirit and scope of the present application, and all of these alterations and modifications shall fall within the protective scope of the present application.

## Claims

1. A vehicle body frame assembly, **characterized by** comprising front shock absorber towers (1) and a front wall frame (2), wherein the front wall frame (2) comprises a front wall upper cross beam (21) and a front windshield lower cross beam (22), the front shock absorber towers (1) and the front wall upper cross beam (21) are respectively connected to a side, facing the interior of a vehicle, of the front windshield lower cross beam (22), and two ends, in the left-right direction of the vehicle, of the front wall upper cross beam (21) are respectively connected to the front shock absorber towers (1).

2. The vehicle body frame assembly according to claim 1, **characterized in that** each of the front shock absorber towers (1) comprises a first plate body (11), a second plate body (12), and a third plate body (13), the first plate body (11) is connected to the second plate body (12) and is located above the second plate body (12); and the first plate body (11) is respectively overlapped on the front wall upper cross beam (21) and the front windshield lower cross beam (22), and the second plate body (12) is connected to an upper end of the third plate body (13) and is matched with the third plate body (13) to enclose a first cavity configured to mount a front shock absorber spring.

3. The vehicle body frame assembly according to claim 2, **characterized in that** each of the front shock absorber towers (1) further comprises a fourth plate body (14) arranged in the first cavity and matched with the third plate body (13) to enclose a second cavity.

4. The vehicle body frame assembly according to claim 1, **characterized in that** the vehicle body frame assembly further comprises a front subframe (3), the front subframe (3) comprises frame longitudinal beams (31) and a first frame cross beam (32), two ends, in the left-right direction of the vehicle, of the first frame cross beam (32) are respectively connected to the frame longitudinal beams (31), and the front shock absorber towers (1) are connected to the corresponding frame longitudinal beams (31).

5. The vehicle body frame assembly according to claim 4, **characterized in that** the front subframe (3) further comprises a second frame cross beam (33), the first frame cross beam (32) and the second frame cross beam (33) are spaced in the front-rear direction of the vehicle, and two ends, in the left-right direction of the vehicle, of the second frame cross beam (33) are respectively connected to the frame longitudinal beams (31).

6. The vehicle body frame assembly according to claim 4, **characterized in that** the vehicle body frame assembly further comprises a floor skeleton (4), the floor skeleton (4) comprises floor diagonal beams (41), floor cross beams (42), and a central tunnel longitudinal beam (43), an end, in the front-rear direction of the vehicle, of the central tunnel longitudinal beam (43) is connected to a middle position of the first frame cross beam (32), two ends, in the left-right direction of the vehicle, of the central tunnel longitudinal beam (43) are respectively connected to the floor cross beams (42), and two ends of the floor diagonal beams (41) are respectively connected to the first frame cross beam (32) and the central tunnel longitudinal beam (43).

7. The vehicle body frame assembly according to claim 6, **characterized in that** the floor skeleton (4) further comprises sill side beams (44) arranged to correspond to the frame longitudinal beams (31) and connected to the corresponding frame longitudinal beams (31), and ends, away from the central tunnel longitudinal beam (43), of the floor cross beams (42) are connected to the corresponding sill side beams (44).

8. The vehicle body frame assembly according to claim 7, **characterized in that** each of the sill side beams (44) comprises a first side beam (441) and a second side beam (442), the first side beam (441) is provided with a third cavity (443), and the second side beam (442) is connected to a side, facing the central tunnel longitudinal beam (43), of the first side beam (441) and is matched with the first side beam (441) to enclose a fourth cavity (444).

9. The vehicle body frame assembly according to claim 6, **characterized in that** the floor skeleton (4) further comprises first reinforcing plates (45) and/or second reinforcing plates (46), the first reinforcing plates (45) are connected to the central tunnel longitudinal beam (43) and extend along the central tunnel longitudinal beam (43), and the second reinforcing plates (46) are connected to the floor cross beams (42) and extend along the floor cross beams (42).

10. A vehicle, **characterized by** comprising the vehicle body frame assembly according to any one of claims 1 to 9.
